# EUROPEAN PATENT SPECIFICATION

(11) **EP 2 359 918 B1**
(45) Date of publication and mention of the grant of the patent: **09.08.2017**
(21) Application number: 10015497.0
(22) Date of filing: 09.12.2010
(51) Int. Cl.: A63H 1/18, A63H 33/00, F02B 63/04, F03G 7/00, H02K 53/00, A63H 33/26

(54) **Gravity-assisted rotational mechanism and generator device cooperating therewith**
Schwerkraftunterstützter Rotationsmechanismus und damit kooperierender Generator
Mécanisme rotatif par gravité et dispositif de générateur coopérant avec celui-ci

(30) Priority: 12.02.2010 TW 99104912
(43) Date of publication of application: 24.08.2011
(73) Proprietor: Huang, Ting Yen, Taipei City 100 (TW); Huang, Cheng, Chieh, Taipei City 100 (TW); Huang, Cheng, Hsiang, Taipei City 100 (TW)
(72) Inventor: Huang, Ting Yen, Taipei City 100 (TW); Huang, Cheng, Chieh, Taipei City 100 (TW); Huang, Cheng, Hsiang, Taipei City 100 (TW)
(74) Representative: Zeitler Volpert Kandlbinder Patent- und Rechtsanwälte Partnerschaft mbB

(56) References cited:
- CA-C- 1 281 660
- DE-A1- 10 218 928
- DE-U1-202008 000 519
- GB-A- 162 723
- GB-A- 447 737

## Description

### BACKGROUND OF THE INVENTION

### 1. Field of the Invention

The present invention relates generally to a gravity-assisted rotational mechanism and a generator device cooperating therewith. The gravity-assisted rotational mechanism has precisely designed weight arrangement. After an initial force is applied to the gravity-assisted rotational mechanism to make it rotate, the gravity-assisted rotational mechanism can more lastingly continuously operate to provide gravitational energy conversion effect.

### 2. Description of the Related Art

Prior art document GB447737A discloses a rotational mechanism according to the preamble of claim 1 and a generator device having such rotational mechanism. A conventional decorative or entertaining self-rotating article such as a top or a bamboo dragonfly is manually driven to swivel so as to achieve visual effect and entertaining or educational or other added function. However, the self-rotating article will contact the ground or air and gradually turn from a fast rotating state to a still state due to friction. The lasting time of the rotation of the article varies with the article's own configuration and weight arrangement.

The so-called "Newton's cradle" is another often seen decoration working in the Law of Conservation of Energy. A Newton's cradle includes multiple metal balls suspended from a rack via strings. The metal balls are originally still and arranged side by side. When a first metal ball is lifted and then released and dropped to hit a second metal ball, the kinetic energy is sequentially transmitted from the second metal ball to a last metal ball. At this time, the last metal ball bounds up to transform the kinetic energy into potential energy. The conversion between the kinetic energy and the potential energy is repeated, whereby the Newton's cradle can lastingly operate.

The above self-rotating mechanism or decoration is driven by external force or operate in the Law of Conservation of Energy. The above decorations can be modified to have longer operation time and wider application range. For example, in condition of minimum energy loss or full conversion of other energy during operation, the self-rotating article can operate more lastingly in different pattern to achieve more novel and funny operation effect.

### SUMMARY OF THE INVENTION

It is therefore a primary object of the present invention to provide a gravity-assisted rotational mechanism and a generator device cooperating therewith. The gravity-assisted rotational mechanism has sophisticated structure and is able to more lastingly self-rotate with lower energy consumption.

To achieve the above and other objects, the gravity-assisted rotational mechanism includes multiple concentric rotational members having different sizes and rotatable about the same rotational center, several link members having equal weights for driving the same, and at least one connection member for pivotally connecting the rotational members with the link members. The rotational members can symmetrically push/pull each other. The link members and the connection member are respectively mounted on interference sections of at least some of the rotational members to transform the interference. The energy of the link members is transmitted via the interference sections to the rotational members and the connection member to form a cycle of energy transmission. During the cycle, in condition of lower energy loss, the gravity-assisted rotational mechanism forms a more lasting self-revolving device.

In the gravity-assisted rotational mechanism, the torque applied to the rotational members varies with the distances between the rotational members and the rotational shaft. In a preferred embodiment, the gravity-assisted rotational mechanism includes four metal rings with different sizes. The four metal rings are concentrically arranged. When the weight of a link member is applied to the rotational members, a larger torque is applied to the rotational member that has a larger size and is spaced from the rotational shaft by a longer distance. In this case, the gravity-assisted rotational mechanism will help revolve in a direction of the torque applied to the larger rotational member. Accordingly, at least one assembly of symmetrical link member and connection member is arranged around the concentric rotational members to provide complementary push/pull effect and achieve the objects of low power loss and lasting rotation.

The present invention can be best understood through the following description and accompanying drawings, wherein:

### BRIEF DESCRIPTION OF THE DRAWINGS

Fig. 1 is a perspective exploded view of the present invention;
Fig. 2 is a perspective assembled view of the present invention;
Fig. 3 is a front assembled view of the present invention;

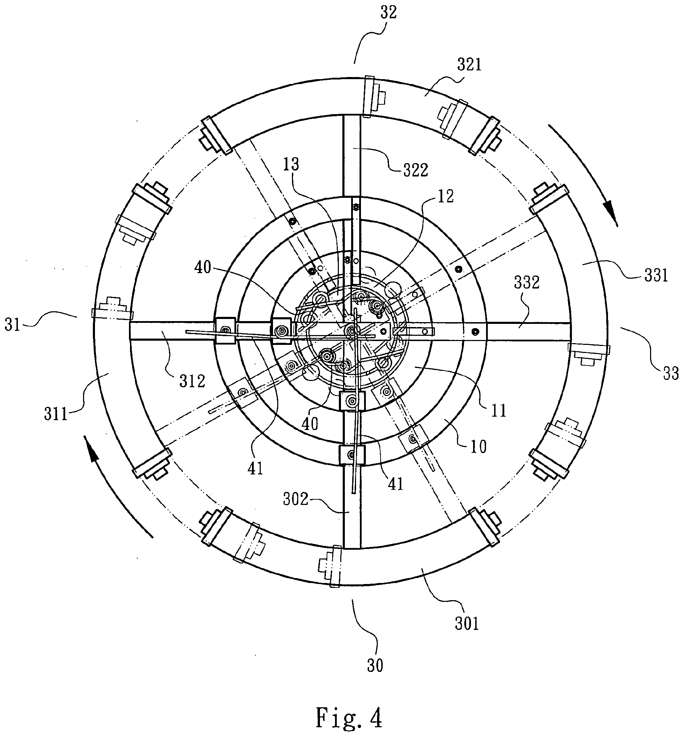

Fig. 4 is a front view according to Fig. 3, showing the operation of the present invention;
Fig. 5 is a perspective view of the present invention, showing that two gravity-assisted rotational mechanisms are assembled with the same rotational center or shaft with an angle difference;
Fig. 6 is a perspective view showing that a generator device is connected to the rotational shaft of the present invention;
Fig. 7 is a plane view according to Fig. 6; and
Fig. 8 is a perspective view according to Fig. 6, showing that a power storage device is further connected to the generator.

### DETAILED DESCRIPTION OF THE PREFERRED EMBODIMENTS

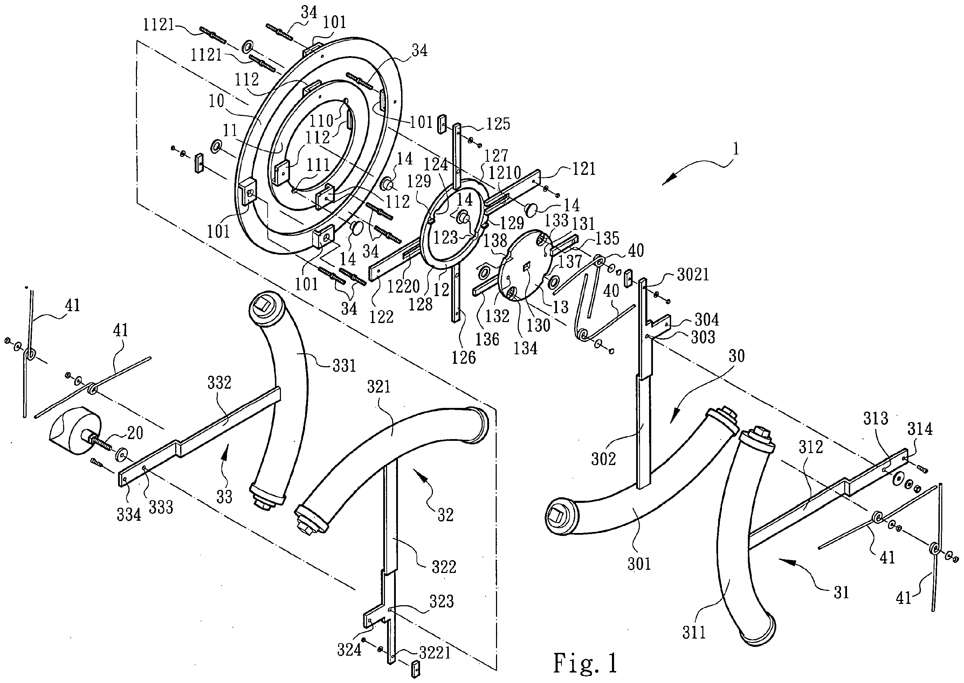

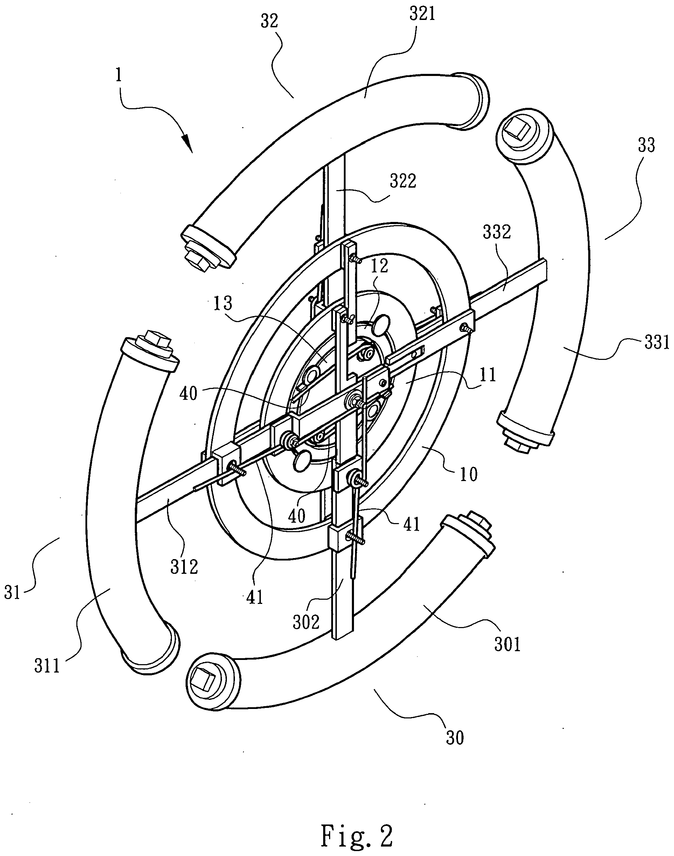

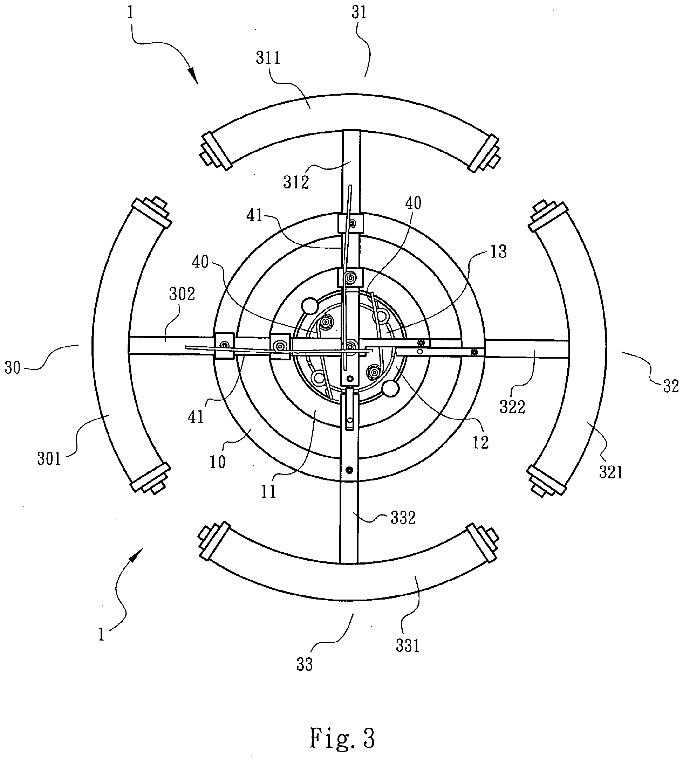

Please refer to Figs. 1 to 3. The gravity-assisted rotational mechanism 1 of the present invention includes a first rotational ring 10, a second rotational ring 11, a third rotational ring 12 and a rotational disc 13, which are rotatable about the same rotational center or shaft 20. The gravity-assisted rotational mechanism 1 of the present invention further includes at least two link members 30, 31, 32, 33 connecting with the first, second and third rotational rings 10, 11, 12 and the rotational disc 13. The rotational disc 13 has a smallest diameter. The third rotational ring 12 is positioned around the rotational disc 13. The second rotational ring 11 is positioned around the third rotational ring 12, while the first rotational ring 10 is further positioned around the second rotational ring 11. The link members are symmetrically arranged at at least 180 degree intervals and connected between the above rotational members.

The rotational disc 13 is formed with a central hole 130 in which the rotational center or shaft 20 is drivingly fitted. The rotational disc 13 is further formed with first pivot points 131, 132, which are symmetrically arranged opposite to each other. The rotational disc 13 is further formed with symmetrical pivotal fitting sections 133, 134. The rotational disc 13 is further provided with symmetrically outward extending first guide plates 135, 136. An outer circumference of the rotational disc 13 is formed with first engagement sections 137, 138. The third rotational ring 12 is provided with symmetrically oppositely outward extending second guide plates 121,122 corresponding to the first guide plates 135, 136. The third rotational ring 12 is further formed wi th second engagement sections 123, 124 corresponding to the first engagement sections 137, 138. The third rotational ring 12 is further provided with outward extending connection plates 125, 126, which are spaced from the second guide plates 121, 122 by a certain angle. An outer circumference of the third rotational ring 12 is formed with third engagement sections 127, 128. Several push/pull sections 129 are disposed on one face of the third rotational ring 12. The second guide plates 121, 122 are formed with insertion slots 1210, 1220 in which the first guide plates 135, 136 are inserted and received.

An inner circumference of the second rotational ring 11 is formed with fourth engagement sections 110, 111 corresponding to the third engagement sections 127, 128. Multiple first interference sections 112 are disposed on two faces of the second rotational ring 11 to provide rotational stop force in a first rotational direction. In this embodiment, the first interference sections 112 are L-shaped plates bent in one single direction.

Multiple second interference sections 101 are disposed on two faces of the first rotational ring 10 corresponding to the first interference sections 112 to provide rotational stop force in a second rotational direction reverse to the first rotational direction. The number of the second interference sections 101 is equal to that of the first interference sections 112. The second interference sections 101 can have the form as the first interference sections 112.

According to the above arrangement, the first guide plates 135, 136 of the rotational disc 13 are inserted in the insertion slots 1210, 1220 of the second guide plates 121, 122. The free ends of the first guide plates 135, 136 are pivotally connected on the second rotational ring 11. The free ends of the second guide plates 121, 122 of the third rotational ring 12 are pivotally connected on the first rotational ring 10. The free ends of the connection plates 125, 126 are also pivotally connected on the first rotational ring 10. The engagement sections 110, 111, 127, 128, 123, 124, 137, 138 are engaged with each other by means of engagement members 14.

Each of the link members 30, 31, 32, 33 is composed of a link bar 302, 312, 322, 332 and a weight body 301, 311, 321, 331 connected with an outer end of the link bar. Weight materials can be placed in the weight bodies 301, 311, 321, 331 to micro-adjust the weight thereof. The weight bodies 301, 311, 321, 331 are assembled with the rotational members and substantially positioned around the first rotational ring 10. The link bars 302, 312, 322, 332 are formed with through holes 303, 313, 323, 333 near inner ends of the link bars 302, 312, 322, 332 corresponding to the rotational center or shaft 20 for pivotally connecting the link bars 302, 312, 322, 332 with the rotational center or shaft 20. In addition, the link bars 302, 312, 322, 332 are respectively formed with stabilization points 304, 314, 324, 334 for pivotally connecting with the first pivot points 131, 132 of the rotational disc 13. The inner ends of some symmetrical link bars 302, 322 additionally have outward extending sections 3021, 3221 for pivotally connecting with the second rotational ring 11. Moreover, different sections of the link bars 302, 312, 322, 332 are respectively restricted within the first and second interference sections 112, 101. Multiple rod-shaped restriction members 34 are loosely fitted through the second interference sections 101 and affixed to the link bars 302, 312, 322, 332. The rod-shaped restriction members 34 are further fixedly fitted through the first interference sections 112.

In a preferred embodiment, in order to keep the positional relationship between the respective components of the gravity-assisted rotational mechanism 1 in a good stabilized state in operation, multiple elastic members 40, 41 are provided between the pivotal fitting sections 133, 134 of the rotational disc 13 and the push/pull sections 129 of the third rotational ring 12 and between the restriction members 34 and the rotational center or shaft 20. The elastic members 40, 41 serve to provide elastic push effect to eliminate the loosening of the respective components and the gaps therebetween so as to stabilize the operation of the gravity-assisted rotational mechanism 1. In addition, the elastic members 40 provide elastic push effect from the rotational center to the pivotal fitting sections 133, 134 on the rotational disc 13. The two free swinging ends respectively act on the rotational center or the rotational shaft 20 and the push/pull sections 129 of the third rotational ring 12. In rotation, one of the elastic forces of the two free swinging ends is applied to the rotational center or the rotary shaft 20 and nearly provides no effect for the forward/backward rotation. The other of the free swinging ends is able to provide rotational assistance force for the third rotational ring 12. Similarity, in rotation, the elastic members 41 acting on the restriction members 34 and the rotational center or the rotational shaft 20 can provide rotational assistance for the first rotational ring 10 so as to enhance the ability to continuously rotate. At this time, the resistance of the front and rear elastic members 40, 41 against the rotation will be minimized to more smoothen the operation.

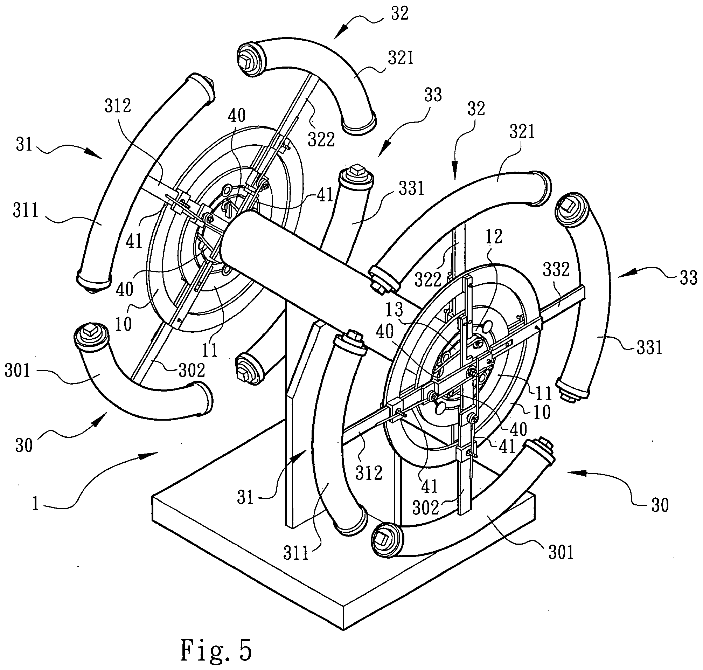

Please refer to Fig. 5. In a preferred embodiment of the present invention, at least two gravity-assisted rotational mechanisms composed of symmetrical link members 33 are assembled on the same rotational center or shaft 20 with a certain difference between the symmetry angles. In this case, the serial rotational inertia can be more smoothly continued.

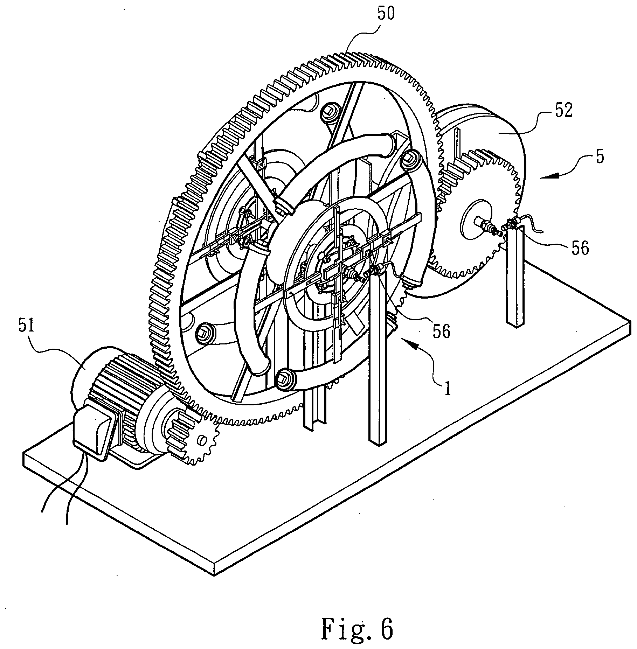

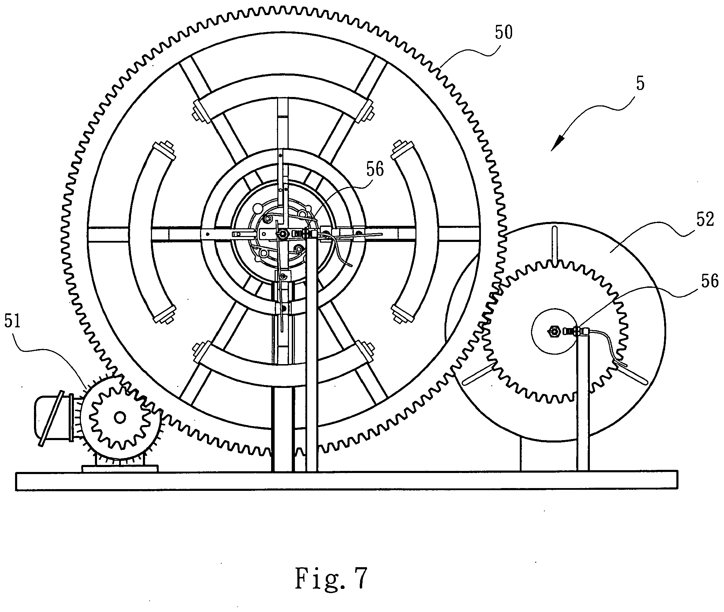

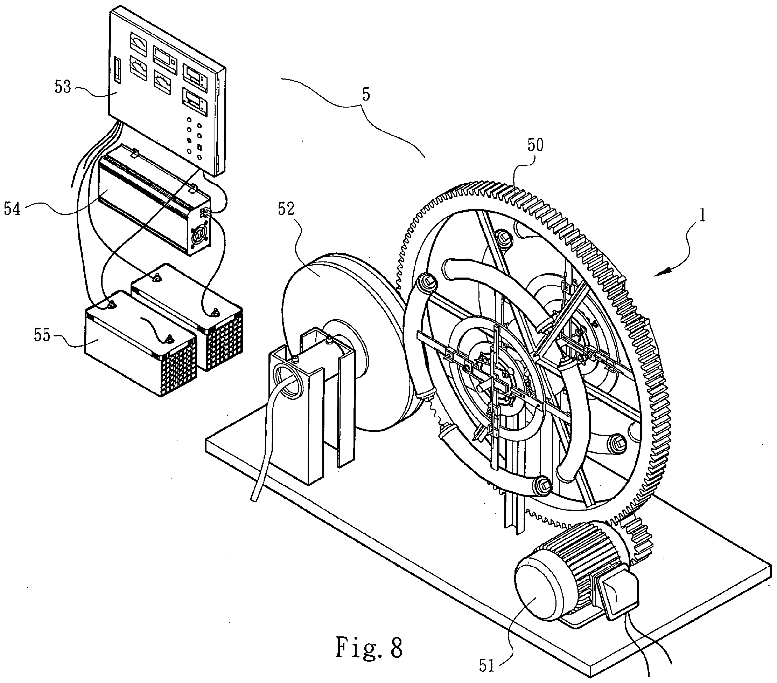

Please now refer to Figs. 6 to 8. A working device or a generator device 5 is further connected to the rotational center or shaft 20 As shown in the drawings, the generator device 5 includes a coupling wheel (or gear) 50 mounted on the rotational center or shaft 20. The coupling wheel 50 is coupled with an actuation device 51 (such as a motor) and a coupling section of a generator 52. The generator 52 is further coupled with an electrical control device 53, which is electrically connected to an electrical conversion device 54 (such as a rectifier or a transformer) and a power storage device 55 (such as a battery). The power storage device 55 can further provide electrical energy to external devices or the actuation device 51 via the electrical conversion device 54. Sensors 56 are further disposed at the rotational center or shaft 20 and the central rotary shaft 522 of the generator 52 for measuring the rotational speed to turn on the actuation device 51 again in proper time and keep an optimal rotational speed for power generation. The power storage device 55 or external civil power can supply necessary power for the actuation device 51.

The above embodiments are only used to illustrate the present invention, not intended to limit the scope thereof. Many modifications of the above embodiments can be made without departing from the spirit of the present invention.
energy and fully utilizing the natural force as usable energy. The generator device 5 includes a coupling wheel (or gear) 50 mounted on the rotational center or shaft 20. The coupling wheel 50 is coupled with an actuat ion device 51 (such as a motor) and a coupl ing section of a generator 52. The generator 52 is further coupled with an electrical control device 53, which is electrically connected to an electrical conversion device 54 (such as a rectifier or a transformer) and a power storage device 55 (such as a battery). The power storage device 55 can further provide electrical energy to external devices or the actuation device 51 via the electrical conversion device 54. Sensors 56 are disposed at the rotational center or shaft 20 and the central rotary shaft 522 of the generator 52 for measuring the rotational speed to turn on the actuat ion device 51 again in proper time and keep an optimal rotational speed for power generation. The power storage device 55 can supply necessary power for the actuation device 51.

The above embodiments are only used to illustrate the present invention, not intended to limit the scope thereof. Many modifications of the above embodiment s can be made wi thout depart ing from the scope of the present invention as defined by the appended claims.

## Claims

1. A gravity-assisted rotational mechanism (1) comprising at least two concentric rotational members having different sizes and rotatable about the same rotational center or shaft (20), an actuation device (51) being connected to the rotational center or shaft (20), at least one pair of link members (30), (31), (32), (33) connected between the above concentric rotational members, **characterised by** interference sections (101), (112) being respectively at least disposed on a large-size rotational member and a small-size rotational member in different rotational directions, the link members being movably restricted within the interference sections, the interference sections (101) of the large-size rotational member serving to provide stop in ascending direction for the link members that rotate and descend, while the interference sections (112) of the small-size rotational member serving to provide stop in descending direction for the link members that rotate and ascend.

2. The gravity-assisted rotational mechanism as claimed in claim 1, wherein the rotational members include a first rotational ring (10), a second rotational ring (11), a third rotational ring (12) and a rotational disc (13), which are concentric with decreasing sizes, each of the link members (30), (31), (32), (33) being composed of a link bar (302), (312), (322), (332) and a weight body (301), (311), (321), (331) connected with the link bar, the interference sections (101) disposed on the first rotational ring (10) being second interference sections, the interference sections (112) disposed on the second rotational ring (11) being first interference sections, the weight bodies being arranged around the first rotational ring, the link bars being formed with through holes (303), (313), (323), (333) near inner ends of the link bars for pivotally connecting the link bars with the rotational center or shaft, the link bars being further respectively formed with stabilization points (304), (314), (324), (334) for pivotally connecting with first pivot points (131), (132) of the rotational disc, the link bars being restricted within different interference sections of the rotational members.

3. The gravity-assisted rotational mechanism as claimed in claim 2, wherein the inner ends of the link bars additionally have outward extending sections (3021), (3221) for pivotally connecting with the second rotational ring.

4. The gravity-assisted rotational mechanism as claimed in claim 2, wherein the rotational disc (13) is formed with a central hole (130) in which the rotational center or shaft is drivingly fitted, the rotational disc, the third rotational ring and the second rotational ring being engaged with each other.

5. The gravity-assisted rotational mechanism as claimed in any of claims 2 to 4, wherein the rotational disc has at least two symmetrically outward extending first guide plates (135), (136), free ends of the first guide plates being pivotally connected on the second rotational ring.

6. The gravity-assisted rotational mechanism as claimed in any of claims 2 to 5, wherein the third rotational ring has symmetrically oppositely outward extending second guide plates (121), (122) corresponding to the first guide plates, the second guide plates being formed with insertion slots in which the first guide plates are inserted, free ends of the second guide plates being pivotal ly connected on the first rotational ring.

7. The gravity-assisted rotational mechanism as claimed in any of claims 2 to 6, wherein the third rotational ring further has symmetrically oppositely outward extending connection plates (125), (126), free ends of the connection plates being pivotally connected on the first rotational ring.

8. The gravity-assisted rotational mechanism as claimed in any of claims 2 to 7, wherein push/pull sections (129) are disposed on the third rotational ring and pivotal fitting sections (133), (134) are disposed on the rotational disc, whereby when the third rotational ring is assembled with the rotational disc, elastic members (40) are mounted between the pivotal fitting sections and the push/pull sections.

9. The gravity-assisted rotational mechanism as claimed in any of claims 2 to 8, wherein different sections of the link bars are respectively restricted within the first and second interference sections, restriction members (34) being at least partially loosely fitted through the second interference sections and affixed to the link bars, elastic members (41) being pivotally mounted between the restriction members and the rotational center or shaft, first ends and second ends of the elastic members respectively acting on the restriction members and the rotational center or shaft.

10. The gravity-assisted rotational mechanism as claimed in any of claims 2 to 9, wherein an elastic member is pivotally mounted between the rotational disc and the third rotational ring, first end and second end of the elastic member respectively exerting push force onto the third rotational ring and the rotational disc.

11. The gravity-assisted rotational mechanism as claimed in any of claims 1 to 10, wherein multiple rotational mechanisms each of which is composed of the rotational members and the link members are mounted on the rotational center or shaft.

12. A generator device (5) having a gravity-assisted rotational mechanism (1) according to claim 1 or 2, the generator device comprising a generator (52) that is connected to the rotational center or shaft (20).

13. The generator device as claimed in claim 12, wherein multiple rotational mechanisms each of which is composed of the rotational members and the link members are mounted on the rotational center or shaft.

14. The generator device as claimed in claim 12 or 13, wherein the generator device comprises a coupling wheel (50) mounted on the rotational center or shaft (20), the coupl ing wheel being coupled with the actuation device (51) and the generator (52).

15. The generator device as claimed in any of claims 12 to 14, wherein the generator is further coupled with an electrical control device (53), the electrical control device being electrically connected to a power storage device (55).

## Patentansprüche

1. Schwerkraftunterstützter Rotationsmechanismus (1), umfassend wenigstens zwei konzentrische Rotationselemente unterschiedlicher Größe und um dasselbe Rotationszentrum oder Welle (20) drehbar, des weiteren eine Antriebsvorrichtung (51), die mit dem Rotationszentrum oder Welle (20) verbunden ist, wenigstens ein Paar Verbindungselemente (30, 31, 32, 33), die zwischen den obigen konzentrischen Rotationselementen angeschlossen sind, **gekennzeichnet durch** Eingreifabschnitte (101, 112), die entsprechend wenigstens auf einem Rotationselement großer Größe und einem Rotationselement kleiner Größe in unterschiedlichen Drehrichtungen angeordnet sind, wobei die Verbindungselemente in den Eingreifabschnitten eingeschränkt beweglich sind und die Eingreifabschnitte (101) des Rotationselementes großer Größe dazu dienen, in aufsteigender Richtung für die Verbindungselemente, die sich drehen und absteigen, einen Halt zu bieten, während die Eingreifabschnitte (112) des Rotationselementes kleiner Größe dazu dienen, in absteigender Richtung für die Verbindungselemente, die sich drehen und absteigen, einen Halt zu bieten.

2. Schwerkraftunterstützter Rotationsmechanismus nach Anspruch 1, **dadurch gekennzeichnet, daß** die Rotationselemente einen ersten Rotationsring (10), einen zweiten Rotationsring (11), einen dritten Rotationsring (12) und eine Rotationsscheibe (13) aufweisen, die mit abnehmender Größe konzentrisch angeordnet sind, daß jedes der Verbindungselemente (30, 31, 32, 33) aus einem Verbindungsstab (302, 312, 322, 332) und einem Gewichtskörper (301, 311, 321, 331) zusammengesetzt ist, wobei letzterer mit dem Verbindungsstab verbunden ist, daß die Eingreifabschnitte (101), die auf dem ersten Rotationsring (10) angeordnet sind, zwei der Eingriffsabschnitte bilden, daß die Eingriffsabschnitte (112), die auf dem zweiten Rotationsring (11) angeordnet sind, erste Eingriffsabschnitte bilden, daß die Gewichtskörper rund um den ersten Rotationsring angeordnet sind, daß die Verbindungsstäbe mit Durchgangslöchern (303, 313, 323, 333) in der Nähe der inneren Enden der Verbindungsstäbe versehen sind, die dazu dienen, die Verbindungsstäbe mit dem Rotationszentrum oder der Rotationswelle zu verbinden, daß die Verbindungsstäbe des weiteren entsprechend mit Stabilisierungspunkten (304, 314, 324, 334) versehen sind, die dazu dienen, mit den ersten Drehpunkten (131, 132) der Rotationsscheibe schwenkbar verbunden zu werden, und daß die Verbindungsstäbe in verschiedenen Eingreifsabschnitten der Rotationselemente beschränkt sind.

3. Schwerkraftunterstützter Rotationsmechanismus nach Anspruch 2, **dadurch gekennzeichnet, daß** die inneren Enden der Verbindungsstäbe zusätzlich sich nach außen erstreckende Abschnitte (3021, 3221) aufweisen, die zur gelenkigen Verbindung mit dem zweiten Rotationsring dienen.

4. Schwerkraftunterstützter Rotationsmechanismus nach Anspruch 2, **dadurch gekennzeichnet, daß** die Rotationsscheibe (13) mit einem zentralen Loch (130) versehen ist, in dem das Rotationszentrum oder die Welle antriebsbeweglich sitzt, wobei die Rotationsscheibe, der dritte Rotationsring und der zweite Rotationsring miteinander in Eingriff stehen.

5. Schwerkraftunterstützter Rotationsmechanismus nach einem der Ansprüche 2 bis 4, **dadurch gekennzeichnet, daß** die Rotationsscheibe wenigstens zwei sich symmetrisch außerhalb erstreckende erste Führungsplatten (135, 136) aufweist, daß die freien Enden der ersten Führungsplatten gelenkig mit dem zweiten Rotationsring verbunden sind.

6. Schwerkraftunterstützter Rotationsmechanismus nach einem der Ansprüche 2 bis 5, **dadurch gekennzeichnet, daß** der dritte Rotationsring sich symmetrisch entgegengesetzt außerhalb erstreckende zweite Führungsplatten (121, 122) aufweist, die den ersten Führungsplatten entsprechen, und daß die zweiten Führungsplatten mit Einsteckschlitzen versehen sind, in die die ersten Führungsplatten eingesteckt sind, wobei die freien Enden der zweiten Führungsplatten auf dem ersten Rotationsring drehbar verbunden sind.

7. Schwerkraftunterstützter Rotationsmechanismus nach einem der Ansprüche 2 bis 6, **dadurch gekennzeichnet, daß** der dritte Rotationsring des weiteren symmetrisch entgegengesetzt sich außerhalb erstreckende Verbindungsplatten (125, 126) aufweist, wobei die freien Enden der Verbindungsplatten auf dem ersten Rotationsring drehbar verbunden sind.

8. Schwerkraftunterstützter Rotationsmechanismus nach einem der Ansprüche 2 bis 7, **dadurch gekennzeichnet, daß** auf dem dritten Rotationsring Schub- / Zugabschnitte (129) angeordnet sind, und daß auf der Rotationsscheibe Drehpaßabschnitte (133, 134) angeordnet sind, wodurch dann, wenn der dritte Rotationsring mit der Drehscheibe zusammengebaut ist, zwischen den Drehpaßabschnitten und den Schub- / Zugabschnitten elastische Körper (40) liegen.

9. Schwerkraftunterstützter Rotationsmechanismus nach einem der Ansprüche 2 bis 8, **dadurch gekennzeichnet, daß** unterschiedliche Abschnitte der Verbindungsstäbe in den ersten und zweiten Eingreifabschnitten entsprechend beschränkt sind, daß Beschränkungselemente (34) sich durch die zweiten Eingreifabschnitte wenigstens teilweise lose erstrecken und an den Verbindungsstäben befestigt sind, daß elastische Elemente (41) zwischen den Beschränkungselementen und dem Rotationszentrum oder der Welle drehbar gelagert sind, und daß erste Enden und zweite Enden der elastischen Elemente entsprechend auf die Beschränkungselemente und das Rotationszentrum oder die Welle einwirken.

10. Schwerkraftunterstützter Rotationsmechanismus nach einem der Ansprüche 2 bis 9, **dadurch gekennzeichnet, daß** ein elastisches Element zwischen der Rotationsscheibe und dem dritten Rotationsring drehbar gelagert ist, und daß das erste Ende sowie das zweite Ende des elastischen Elementes entsprechend eine Schubkraft auf den dritten Rotationsring und die dritte Rotationsscheibe ausüben.

11. Schwerkraftunterstützter Rotationsmechanismus nach einem der Ansprüche 2 bis 10, **dadurch gekennzeichnet, daß** bei einer Vielzahl von Rotationsmechanismen jeder aus den Rotationselementen zusammengesetzt ist, und daß die Verbindungselemente auf dem Rotationszentrum oder der Welle gelagert sind.

12. Generatoreinrichtung mit einem schwerkraftunterstützten Rotationsmechanismus (1) gemäß den Ansprüchen 1 oder 2, **dadurch gekennzeichnet, daß** die Generatoreinrichtung einen Generator (52) aufweist, der mit dem Rotationszentrum oder der Welle (20) verbunden ist.

13. Generatoreinrichtung nach Anspruch 12, **dadurch gekennzeichnet, daß** jeder Rotationsmechanismus aus einer Vielzahl von Rotationsmechanismen aus den Rotationselementen zusammengesetzt ist, und daß die Verbindungselemente auf dem Rotationszentrum oder der Welle angebracht sind.

14. Generatoreinrichtung nach Anspruch 12 oder 13, **dadurch gekennzeichnet, daß** die Generatoreinrichtung ein Kupplungsrad (50) aufweist, das auf dem Rotationszentrum oder der Welle (20) gelagert ist, und daß das Kupplungsrad mit einer Antriebsvorrichtung (51) und dem Generator (52) gekoppelt ist.

15. Generatoreinrichtung nach einem der Ansprüche 12 bis 14, **dadurch gekennzeichnet, daß** der Generator des weiteren mit einer elektrischen Steuervorrichtung (53) gekoppelt ist, und daß diese elektrische Steuervorrichtung elektrisch an eine Stromspeichervorrichtung (55) angeschlossen ist.

## Revendications

1. Mécanisme de rotation assisté par gravité (1) comprenant au moins deux éléments de rotation concentriques ayant des tailles différentes et capables de rotation autour du même centre ou arbre de rotation (20), un dispositif d'actionnement (51) étant connecté au centre ou à l'arbre de rotation (20), au moins une paire d'éléments de liaison (30), (31), (32), (33) connectés entre les éléments de rotation concentriques ci-dessus,
**caractérisé par**
des sections d'interférence (101), (112) qui sont respectivement au moins disposées sur un élément de rotation de grande taille et un élément de rotation de petite taille dans des directions de rotation différentes, les éléments de liaison étant déplaçables de façon restreinte à l'intérieur des sections d'interférence, les sections d'interférence (101) de l'élément de rotation de grande taille servant à constituer un arrêt en direction ascendante pour les éléments de liaison qui sont en rotation et qui descendent, alors que les sections d'interférence (112) de l'élément de rotation de petite taille servent à constituer un arrêt en direction descendante pour les éléments de liaison qui sont en rotation et qui montent.

2. Mécanisme de rotation assisté par gravité selon la revendication 1, dans lequel les éléments de rotation incluent une première bague de rotation (10), une seconde bague de rotation (11), une troisième bague de rotation (12) et un disque de rotation (13) qui sont concentriques avec des tailles décroissantes, chacun des éléments de liaison (30), (31), (32), (33) étant composé d'une barre de liaison (302), (312), (322), (332) et un corps pondéral (301), (311), (321), (331) connecté avec la barre de liaison, les sections d'interférence (101) disposées sur la première bague de rotation (10) étant des secondes sections d'interférence, les sections d'interférence (112) disposées sur la seconde bague de rotation (11) étant des premières sections d'interférence, les corps pondéraux étant agencés autour de la première bague de rotation, les barres de liaison étant formées avec des trous traversants (303), (313), (323), (333) à proximité des extrémités intérieures des barres de liaison pour connecter en pivotement les barres de liaison avec le centre ou l'arbre de rotation, les barres de liaison étant en outre respectivement formées avec des points de stabilisation (304), (314), (324), (334) pour la connexion en pivotement avec des premiers points de pivot (131), (132) du disque de rotation, les barres de liaison étant restreintes à l'intérieur de sections d'interférence différentes des éléments de rotation.

3. Mécanisme de rotation assisté par gravité selon la revendication 2, dans lequel les extrémités intérieures des barres de liaison ont additionnellement des sections s'étendant vers l'extérieur (3021), (3221) pour la connexion en pivotement avec la seconde bague de rotation.

4. Mécanisme de rotation assisté par gravité selon la revendication 2, dans lequel le disque de rotation (13) est formé avec un trou central (130) dans lequel le centre ou l'arbre de rotation est engagé en termes d'entraînement, le disque de rotation, la troisième bague de rotation et la seconde bague de rotation étant engagés les uns avec les autres.

5. Mécanisme de rotation assisté par gravité selon l'une quelconque des revendications 2 à 4, dans lequel le disque de rotation comprend au moins deux premières plaques de guidage (135), (136) s'étendant symétriquement vers l'extérieur, des extrémités libres des premières plaques de guidage étant connectées en pivotement sur la seconde bague de rotation.

6. Mécanisme de rotation assisté par gravité selon l'une quelconque des revendications 2 à 5, dans lequel la troisième bague de rotation comprend des secondes plaques de guidage (121), (122) s'étendant symétriquement et de façon opposée vers l'extérieur, correspondant aux premières plaques de guidage, les secondes plaques de guidage étant formées avec des fentes d'insertion dans lesquelles sont insérées les premières plaques de guidage, des extrémités libres des secondes plaques de guidage étant connectées en pivotement sur la première bague de rotation.

7. Mécanisme de rotation assisté par gravité selon l'une quelconque des revendications 2 à 6, dans lequel la troisième bague de rotation comprend en outre des plaques de connexion (125), (126) s'étendant symétriquement et de façon opposée vers l'extérieur, des extrémités libres des plaques de connexion étant connectées en pivotement sur la première bague de rotation.

8. Mécanisme de rotation assisté par gravité selon l'une quelconque des revendications 2 à 7, dans lequel des sections poussées/tirées (129) sont disposées sur la troisième bague de rotation et des sections de montage pivotantes (133), (134) sont disposées sur le disque de rotation, grâce à quoi quand la troisième bague de rotation est assemblée avec le disque de rotation, des éléments élastiques (40) sont montés entre les sections de montage pivotantes et les sections poussées/tirées.

9. Mécanisme de rotation assisté par gravité selon l'une quelconque des revendications 2 à 8, dans lequel différentes sections des barres de liaison sont respectivement restreintes à l'intérieur de la première et de la seconde section d'interférence, des éléments de restriction (34) étant au moins partiellement montés de façon lâche à travers les secondes sections d'interférence et fixés sur les barres de liaison, des éléments élastiques (41) étant montés en pivotement entre les éléments de restriction et le centre ou l'arbre de rotation, des premières extrémités et des secondes extrémités des éléments élastiques agissant respectivement sur les éléments de restriction et sur le centre ou l'arbre de rotation.

10. Mécanisme de rotation assisté par gravité selon l'une quelconque des revendications 2 à 9, dans lequel un élément élastique est monté en pivotement entre le disque de rotation et la troisième bague de rotation, la première et la seconde extrémité de l'élément élastique exerçant respectivement une force de poussée sur la troisième bague de rotation et sur le disque de rotation.

11. Mécanisme de rotation assisté par gravité selon l'une quelconque des revendications 1 à 10, dans lequel une multiplicité de mécanismes de rotation, dont chacun est composé des éléments de rotation et des éléments de liaison, sont montés sur le centre ou l'arbre de rotation.

12. Dispositif générateur (5) ayant un mécanisme de rotation assistée par gravité (1) selon la revendication 1 ou 2, le dispositif générateur comprenant un générateur (52) qui est connecté au centre ou à l'arbre de rotation (20).

13. Dispositif générateur selon la revendication 12, dans lequel une multiplicité de mécanismes de rotation, dont chacun est composé des éléments de rotation et des éléments de liaison, sont montés sur le centre ou l'arbre de rotation.

14. Dispositif générateur selon la revendication 12 ou 13, dans lequel le dispositif générateur comprend une roue de couplage (50) montée sur le centre ou l'arbre de rotation (20), la roue de couplage étend couplée avec le dispositif d'actionnement (51) et avec le générateur (52).

15. Dispositif générateur selon l'une quelconque des revendications 12 à 14, dans lequel le générateur est en outre couplé avec un dispositif de commande électrique (53), le dispositif de commande électrique étant connecté électriquement à un dispositif de stockage de puissance (55).
